# EUROPÄISCHE PATENTSCHRIFT

(11) **EP 4 018 886 B1**
(45) Veröffentlichungstag und Bekanntmachung des Hinweises auf die Patenterteilung: **26.08.2026**
(21) Anmeldenummer: 21211294.0
(22) Anmeldetag: 30.11.2021
(51) Int. Cl.: A47J 31/36, A47J 31/06

(54) **BRÜHEINRICHTUNG UND KAFFEEAUTOMAT SOWIE VERFAHREN ZUM BETREIBEN EINES KAFFEEAUTOMATEN**
BREWING DEVICE AND COFFEE MACHINE AND METHOD FOR OPERATING A COFFEE MACHINE
DISPOSITIF D'INFUSION ET MACHINE À CAFÉ, AINSI QUE PROCÉDÉ DE FONCTIONNEMENT D'UNE MACHINE À CAFÉ

(30) Priorität: 15.12.2020 DE 102020215907
(43) Veröffentlichungstag der Anmeldung: 29.06.2022
(73) Patentinhaber: BSH Hausgeräte GmbH, 81739 München (DE)
(72) Erfinder: Breucker, Manfred, 83417 Kirchanschöring (DE); Eder, Florian, 83132 Pittenhart (DE); Einsiedler, Thomas, 83278 Traunstein (DE); Seler, Ismar, 83278 Traunstein (DE); Sollmann, Martin, 83278 Traunstein (DE)

(56) Entgegenhaltungen:
- EP-A1- 0 486 434
- EP-A1- 3 545 801
- WO-A1-2009/021395
- WO-A1-2016/124450
- KR-B1- 100 442 984

## Beschreibung

Die vorliegende Erfindung betrifft eine Brüheinrichtung, einen Kaffeeautomaten mit einer Brüheinrichtung und ein Verfahren zum Betreiben eines Kaffeeautomaten, wobei ein Brühtopf zur Aufnahme von Brühgut vorgesehen ist, sowie ein relativ zum Brühtopf verschiebbarer Kolben zum Auswerfen des Brühguts und ein Drainage- und Belüftungsauslass im Brühtopf zur Belüftung und Drainage von Restwasser aus dem Brühtopf.

Kaffeeautomaten mit einer Brüheinrichtung und Verfahren zu deren Betrieb sind z.B. aus der KR 100 442 984 B1, der WO 2016/124450 A1, der WO2009/021395 A1 und der EP 0 486 434 A1 bekannt.

Eine herkömmliche Brüheinrichtung eines Kaffeeautomaten mit einem Brühtopf mit Drainage- und Belüftungsauslass ist z. B. aus der EP 3 545 801 A1 bekannt. Dabei ist der Kolben dazu eingerichtet, in einer Drainage- und Belüftungsposition den Drainage- und Belüftungsauslass freizugeben und in einer Brühposition den Drainage- und Belüftungsauslass zu verschließen. Der Kolben ist ohnehin bekanntermaßen über eine Verzahnung seiner Kolbenstange mit einem Getriebe gekoppelt, das gegen ein Gehäuse der Brüheinrichtung vorgespannt ist. Zwar ermöglicht diese Vorspannung beim Öffnen der geschlossen Brühkammer ein Entwässern und einen Luftzutritt zum Brühtopf, sodass beim Bewegen des Brühtopfs, weg von einem Brühkopf, kein Unterdruck in der Brühkammer entsteht. Jedoch hat sich gezeigt, dass auch bei derartigen Brüheinrichtungen ein zu hoher Anteil von Restfeuchtigkeit im Brühgut verbleiben kann.

Der Feuchtigkeitsanteil im ausgelaugten Brühgut, das bekanntermaßen auch als Trester oder Tresterkuchen bezeichnet wird, spielt für Bedienpersonen solcher Kaffeeautomaten eine große Rolle. Das Handling der Trester beim Entleeren eines dafür vorgesehenen Auffangbehälters ist bei zu hoher Restfeuchte oft unangenehm und umständlich. Denn Teile des Brühguts können durch die Restfeuchtigkeit an der Auffangschale anhaften. Zudem begünstigt ein höherer Anteil von Restfeuchtigkeit auch die Bildung von Schimmel.

Darüber hinaus ist es auch nachteilig, dass die Trester bei einem höheren Anteil von Restfeuchtigkeit leicht zerbröseln, was die Wahrscheinlichkeit eines Anhaftens verstärkt.

Aufgabe der Erfindung ist es daher, die genannten Nachteile zu überwinden und insbesondere den Anteil von Restfeuchtigkeit im Brühgut nach einem Brühvorgang weiter zu verringern, oder eine alternative Ausgestaltung bereitzustellen, die keinen oder einen geringen Einfluss auf die Herstellkosten und/oder den Bauraum der Brüheinrichtung und des Kaffeeautomaten hat.

Diese Aufgabe wird durch eine Brüheinrichtung mit den Merkmalen des Anspruchs 1 gelöst sowie durch einen Kaffeeautomaten mit den Merkmalen des Anspruchs 8 und durch ein Verfahren gemäß Anspruch 9. Vorteilhafte Weiterbildungen der Erfindung sind Gegenstand der abhängigen Ansprüche.

Erfindungsgemäß wird eine Brüheinrichtung mit einem Brühtopf zur Aufnahme von Brühgut, einem relativ zum Brühtopf verschiebbaren Kolben zum Auswerfen des Brühguts und einem Drainage- und Belüftungsauslass im Brühtopf zur Drainage von Restwasser aus dem Brühtopf weitergebildet. Der Kolben ist dazu eingerichtet, in einer Drainage- und/oder Belüftungsposition den Drainage- und Belüftungsauslass freizugeben und in einer Brühposition den Drainage- und Belüftungsauslass zu verschließen. Erfindungsgemäß ist der Kolben in der Brühposition durch eine Federeinrichtung an einem Brühtopfboden des Brühtopfs vorgespannt. Durch die Vorspannung mittels der Federreinrichtung am Brühtopfboden können einerseits Übertragungsverluste vermieden werden, die bei den bekannten Lösungen an einer Verzahnung am Kolben und dem Getriebe am Gehäuse der Brüheinrichtung auftreten. Andererseits würde eine Erhöhung der Getriebevorspannung zwangsläufig Seitenkräfte im Kolben hervorrufen, die eine aufwändige Lagerung und Führung des Kolbens erforderlich machen. Darüber hinaus wird durch die montagefreundliche Anordnung der Federeinrichtung am Brühtopfboden herstellkosten- und bauraumoptimiert eine direkte Krafteinleitung einer deutlich höheren Vorspannkraft ermöglicht. Dadurch kann am Ende eines Brühvorgangs beim Stoppen einer Brühfluidpumpe mit der Federeinrichtung am Brühtopfboden der Kolben zum Freigeben des Drainage- und Belüftungsauslass bewegt werden - und erstmals gleichzeitig durch die Kraft dieser Federeinrichtung die Restfeuchte aus dem Brühgut gedrückt werden. Der Anteil von Restfeuchtigkeit im Brühgut kann dadurch bei sehr geringem Einfluss auf die Herstellkosten und den Bauraum erheblich verringert werden. Dadurch kann einem Auftreten von Schimmelbildung effektiv entgegengewirkt und das Handling der Trester beim Entleeren des dafür vorgesehenen Auffangbehälters deutlich verbessert werden.

Bei einer vorteilhaften Weiterbildung der erfindungsgemäßen Lösung ist die Federeinrichtung an einem im Brühtopfboden vorgesehen Durchgangsloch für eine Kolbenstange des Kolbens und/oder benachbart zu einem Dichtelement angeordnet. In allen drei Varianten wird einerseits eine besonders zielgerichtete Krafteinwirkung vom Federelement auf den Kolben und das Brühgut ermöglicht - und andererseits eine vereinfachte Montage bei der Herstellung ermöglicht. In der ersten Alternative bietet das Durchgangsloch bei der Montage eine vorteilhafte Orientierungshilfe zum zielsicheren Platzieren des Federelements im Brühtopfboden. Bei der zweiten Alternative ermöglicht die zum Dichtelement benachbarte Anordnung eine Montage der beiden Teile (Federeinrichtung und Dichtelement) im selben oder einem gleichen Arbeitsgang. Die Kombination ermöglicht nun, dass sich die Vorteile der Alternativen ergänzen. Darüber hinaus ermöglicht diese Kombination eine Vormontage der beiden Teile auf den Kolben und ermöglicht damit eine Montage der drei Teile in den Brühtopf im selben Arbeitsgang. So kann auch der Einfluss des Federelements auf die Herstellkosten verbessert werden.

Bei einer weiteren vorteilhaften Weiterbildung der erfindungsgemäßen Lösung umgreift die Federeinrichtung die Kolbenstange zumindest teilweise. Dadurch werden Seitenkräfte bei der Krafteinleitung in den Kolben minimiert, was eine besonders einfache Führung des Kolbens und der Kolbenstange ermöglicht. Dies kommt umso mehr zum Tragen, umso weiter die Federeinrichtung die Kolbenstange umgreift. Dadurch kann der Einfluss des Federelements auf die Herstellkosten weiter verbessert werden.

Bei einer weiteren vorteilhaften Weiterbildung der erfindungsgemäßen Lösung umfasst die Federeinrichtung eine Tellerfeder, eine Evolutfeder, eine Membranfeder und/oder eine konische Druckfeder, insbesondere eine Kegelschraubenfeder. Mit einer Tellerfeder kann schon bei einer minimalen Verschiebung des Brühtopfs relativ zum Kolben, aus der Brühposition heraus, die Drainage- und/oder Belüftungsposition erreicht und gleichermaßen eine große Vorspannkraft realisiert werden. Das aneinander Gleiten von Bandwindungen einer Evolutfeder kann Seitenkräfte minimieren, sodass die Führung des Kolbens weiter vereinfacht werden kann. Mit einer Membranfeder kann neben einer hohen erreichbaren Vorspannkraft auch ein besonders gezieltes Ansprechen der Federkraft entlang des Verschiebewegs des Brühtopfes relativ zum Kolben erreicht werden. Mit einer als Kegelschraubenfeder ausgeführten, konischen Druckfeder kann im vorhandenen Bauraum eine vergleichsweise hohe Kraft auf den Kolben über einen vergleichsweise langen Verschiebeweg - des Brühtopfes relativ zum Kolben - ausgeübt werden. So kann die Restfeuchte besonders effektiv aus dem Brühgut gedrückt werden. Bei einer weiteren vorteilhaften Weiterbildung der erfindungsgemäßen Lösung ist die konische Druckfeder, insbesondere Kegelschraubenfeder, derart gestaltet, dass in der Brühposition des Kolbens mindestens zwei Federwindungen entlang einer Erstreckungsrichtung der Kolbenstange im Wesentlichen auf gleicher Höhe liegen. Durch eine derartige Federgestaltung wird einerseits ein sehr geringer Bauraumbedarf ermöglicht, da sich mindestens zwei Federwindungen nebeneinanderlegen können. Andererseits wird durch eine derartige Federgestaltung nicht ausgeschlossen, dass mindestens zwei Federwindungen bei einem Stauchen aufeinander aufliegen und eine Blockstellung ermöglichen.

Bei einer weiteren vorteilhaften Weiterbildung der erfindungsgemäßen Lösung ist die konische Druckfeder, insbesondere Kegelschraubenfeder, derart gestaltet, dass in der Brühposition des Kolbens ein Abstand zwischen einem oberen Federende und einem unteren Federende einem einfachen bis dreifachen Wert eines mittleren Federdrahtdurchmessers entspricht. Eine derartige Federgestaltung ermöglicht einen besonders vorteilhaften Kompromiss aus sehr geringem Bauraumbedarf - oder auch bestmöglicher Ausnutzung des vorhandenen Bauraums - und einer für das Drücken der Restfeuchte aus dem Brühgut besonders vorteilhaften Federkennlinie.

Bei einer weiteren vorteilhaften Weiterbildung der erfindungsgemäßen Lösung ist der Drainage- und Belüftungsauslass an einer tiefsten Stelle des Brühtopfs vorgesehen wobei zusätzlich oder alternativ die Kolbenstange mindestens eine Ausnehmung zur gezielten Be- und/oder Entlüftungsführung aufweist. Dies ermöglicht insbesondere, dass die aus dem Brühgut gedrückte Restfeuchte auch bei geringer Flüssigkeitsmenge noch zuverlässig ausgeleitet werden kann. Durch eine entsprechend gewählte Platzierung und Dimensionierung der Ausnehmung, insbesondere in Bezug auf eine Dichtkante des Dichtelements, kann eine besonders gezielte Belüftung erreicht werden. Dadurch kann insbesondere ein Belüftungszeitpunkt und eine Freigabegeschwindigkeit besonders gezielt durch die Relativbewegung des Brühtopfs relativ zum Kolben gesteuert werden. Die Kombination ermöglicht eine Gestaltung, die effektiv verhindert, dass ausgedrückte Tropfen durch einströmende Luft beim Öffnen zurück in das Brühgut gefördert werden.

Die eingangs genannte Aufgabe wird erfindungsgemäß auch gelöst durch einen Kaffeeautomaten, insbesondere einen Kaffeevollautomaten, mit einer Brüheinrichtung mit den oben genannten Merkmalen. Einerseits stellen diese Automaten die Brühflüssigkeit bereit, deren Restfeuchtigkeit im ausgelaugten Brühgut, auch Trester oder Tresterkuchen genannt, das Handling durch eine Bedienperson negativ beeinflusst. Andererseits ist der Einfluss der Restfeuchtigkeit bei diesen Automaten auf deren Handling erheblich. Besonders bei Kaffeevollautomaten kann durch die erfindungsgemäße Lösung das Handling beim Entleeren eines dafür vorgesehenen Auffangbehälters bei geringem Einfluss auf den Bauraum erheblich verbessert werden.

Die eingangs genannte Aufgabe wird erfindungsgemäß auch gelöst durch ein Verfahren zum Betreiben eines Kaffeeautomaten, mit einer Brüheinrichtung mit den oben genannten Merkmalen, das folgende Schritten aufweist:
a) verschieben des Brühtopfs relativ zu einem Brühkopf zum Schließen einer Brühkammer und verschieben des Brühtopfs relativ zum Kolben in eine Brühposition des Kolbens zum Verschließen des Drainage- und Belüftungsauslasses,
b) fördern von Brühfluid durch betreiben einer Pumpe für eine Brühzeit und beenden des Förderns durch stoppen der Pumpe, wobei
c) nach dem Stoppen der Pumpe während einer vordefinierten ersten Verweilzeit im Wesentlichen kein Verschieben des Brühtopfs relativ zum Brühkopf oder zum Kolben erfolgt, und anschließend
d) ein Verschieben des Brühtopfs relativ zum Kolben soweit erfolgt, dass in der Drainage- und/oder Belüftungsposition des Kolbens der Drainage- und Belüftungsauslass freigegeben ist, und anschließend
e) während einer vordefinierten zweiten Verweilzeit im Wesentlichen kein Verschieben des Brühtopfs relativ zum Kolben erfolgt, und anschließend
f) ein weiteres Verschieben des Brühtopfs relativ zum Brühkopf zum Öffnen der Brühkammer und Auswerfen des Brühguts erfolgt. Dadurch kann einerseits für eine definierte Zeit nach dem stoppen der Pumpe eine maximale Vorspannung der Federeinrichtung zum Ausdrücken der Restfeuchte aus dem Brühgut genutzt werden. Andererseits kann dadurch zeitsparend und automatisiert sowie gleichzeitig und definiert belüftet und weiterhin Restfeuchtigkeit ausgedrückt und abgeführt werden. Um diese Vorteile bestmöglich zu erreichen, kann die erste Verweilzeit bevorzugt in einem Bereich von 0,5 bis 4 Sekunden vordefiniert sein, insbesondere auf 2 Sekunden. Hierzu kann auch die zweite Verweilzeit bevorzugt in einem Bereich von 0,5 bis 4 Sekunden vordefiniert sein, insbesondere auf 2 Sekunden.

Eine vorteilhafte Weiterbildung des erfindungsgemäßen Verfahrens weist sich dadurch aus, dass zwischen den Schritten e) und f) in einem Schritt
e - i) ein Verschieben des Brühtopfs relativ zum Kolben soweit erfolgt, dass der Kolben erneut in die Brühposition gelangt und der Drainage- und Belüftungsauslasses verschlossen ist, und
e - ii) während einer vordefinierten dritten Verweilzeit im Wesentlichen kein Verschieben des Brühtopfs relativ zum Kolben erfolgt, und anschließend
e - iii) während einer vordefinierten vierten Verweilzeit der Brühtopf relativ zum Kolben soweit verschoben wird, dass in der Drainage- und/oder Belüftungsposition des Kolbens der Drainage- und Belüftungsauslass freigegeben ist. Dadurch kann insbesondere zeitsparend und automatisiert sowie definiert auch der Anteil der Restfeuchtigkeit aus dem Brühgut gedrückt und abgeführt werden, der in der ersten und zweiten Verweilzeit noch in Randbereichen des Brühguts verbleibt. Um dies bestmöglich zu erreichen, kann die dritte Verweilzeit bevorzugt in einem Bereich von 0,5 bis 3 Sekunden vordefiniert sein, insbesondere auf eine Sekunde. Hierzu kann auch die vierte Verweilzeit bevorzugt in einem Bereich von 0,5 bis 4 Sekunden vordefiniert sein, insbesondere auf 2 Sekunden.

Eine weitere vorteilhafte Weiterbildung des erfindungsgemäßen Verfahrens weist sich dadurch aus, dass in einem Reinigungsmodus vor Schritt a) ein Reinigungsmittel, insbesondere in Form einer wasserlöslichen Reinigungstablette, in den Brühtopf eingebracht wird, wobei im Schritt
a) durch das Verschieben des Brühtopfs relativ zum Brühkopf zum Schließen der Brühkammer und Verschieben des Brühtopfs relativ zum Kolben in die Brühposition des Kolbens zum Verschließen des Drainage- und Belüftungsauslasses das Reinigungsmittel zwischen dem Kolben und dem Brühkopf gelangt und das Verschließen des Drainage- und Belüftungsauslasses unabhängig vom Erreichen der Brühposition in einer ersten Reinigungsposition erreicht wird, in Schritt
b) ein fördern von Brühfluid zu einem Lösen des Reinigungsmittels durch betreiben einer Pumpe für eine erste Reinigungszeit erfolgt, in Schritt
c) während einer ersten Reinigerlösezeit im Wesentlichen kein Verschieben des Brühtopfs relativ zum Kolben erfolgt, in Schritt
d) durch das Lösen des Reinigungsmittels bei Erreichen einer zweiten Reinigerlösezeit ohne ein Verschieben des Brühtopfs eine Verschiebung des Kolbens soweit erfolgt, dass in der Drainage- und/oder Belüftungsposition des Kolbens der Drainage- und Belüftungsauslass zumindest kurzzeitig freigegeben ist, was durch eine Änderung einer gemessenen elektrischen Leistung der Pumpe ein Erreichen der zweiten Reinigerlösezeit erfasst wird, und anschließend
e) ein Verschieben des Brühtopfs relativ zum Kolben in eine zweite Reinigungsposition derart erfolgt, dass der Drainage- und Belüftungsauslass für mindestens eine dritte Reinigerlösezeit verschlossen wird, und anschließend
f) ein weiteres Verschieben des Brühtopfs relativ zum Brühkopf zum Öffnen der Brühkammer und gezieltem Auslassen von noch im Brühtopf verbliebenem, insbesondere gelöstem, Reinigungsmittel erfolgt. Dadurch kann verhindert werden, dass im Reinigungsmodus eine erhebliche Menge an Flüssigkeit aus dem Brühtopf in den darunter befindlichen Trester im Auffangbehälter gelangt. Denn durch ein Lösen des z. B. als wasserlösliche Tablette eingebrachten Reinigungsmittels, das bzw. die am Beginn des Reinigungsmodus in der ersten Reinigungsposition auf den Kolben einwirkt und den Drainage- und/oder Belüftungsauslass noch verschließt, wird auch die auf den Kolben wirkende Kraft verringert, sodass sich der Drainage- und Belüftungsauslass nach einem Auflösen des Reinigungsmittels frühzeitig öffnen würde. Diese erhebliche Menge an Flüssigkeit würde wiederum das Handling der Trester beim Entleeren des Auffangbehälters erschweren und wird daher durch die vorteilhafte Weiterbildung des erfindungsgemäßen Verfahrens verhindert.

Insbesondere kann das Erfassen einer Änderung einer gemessenen elektrischen Leistung der Pumpe und damit auch das Erfassen des Erreichens der jeweiligen Reinigerlösezeit durch eine Steuerungseinrichtung und einer elektrischen Leistungsmessvorrichtung, insbesondere einer Prozesssteuerungseinrichtung eines Kaffeeautomaten mit intergrierter elektrischer Leistungsmessvorrichtung, erfolgen.

Eine weitere vorteilhafte Weiterbildung des erfindungsgemäßen Verfahrens weist sich dadurch aus, dass
e) durch eine weitere Änderung einer gemessenen elektrischen Leistung der Pumpe ein weiteres Verschieben des Kolbens und Freigeben des Drainage- und Belüftungsauslasses und somit ein Erreichen einer vierten Reinigerlösezeit erfasst wird, und daraufhin ein weiteres Verschieben des Brühtopfs relativ zum Brühkopf und/oder zum Kolben in eine dritte Reinigungsposition derart erfolgt, dass der Drainage- und Belüftungsauslass für mindestens eine fünfte Reinigerlösezeit verschlossen wird, bevor ein Verschieben und Öffnen gemäß Schritt f) erfolgt. Dadurch kann insbesondere bei einer groß dimensionierten Reinigerdosis, bei großen Reinigertabletten und/oder bei einer stehend eingelegten Tablette, die nicht auf ihrer kreisförmigen Oberfläche, sondern auf ihrer Umfangsfläche zum Liegen kommt, dennoch über den gesamten Reinigungsmodus hin verhindert werden, dass eine erhebliche Menge an Flüssigkeit aus dem Brühtopf in den Trester im Auffangbehälter gelangt.

Somit kann bei geringem Einfluss auf Herstellkosten und Bauraum ein restfeuchtigkeitsbedingtes Anhaften von Brühgut an der Auffangschale verhindert werden, was auch das Handling der Trester beim Entleeren eines Auffangbehälters verbessert.

Weitere Vorteile und vorteilhafte Ausgestaltungen ergeben sich aus der im Folgenden in Verbindung mit den Figuren 1 bis 6 beschriebenen Ausführungsform. Es zeigen:
- Figur 1: eine schematische Schnittdarstellung durch ein Ausführungsbeispiel einer erfindungsgemäßen Brüheinrichtung in einer Drainage- und Belüftungsposition des Kolbens,
- Figur 2: eine Schnittdarstellung nach Figur 1 in Brühposition des Kolbens mit verschlossenem Drainage- und Belüftungsauslass,
- Figur 3: eine Schnittdarstellung nach Figur 1 und 2 in einer Position zum Auswerfen des Brühguts,
- Figur 4: eine schematische Schnittdarstellung durch ein Ausführungsbeispiel eines erfindungsgemäßen Kaffeevollautomaten in einer Drainage- und Belüftungsposition des Kolbens der Brüheinrichtung,
- Figur 5: eine Darstellung eines aus dem Stand er Technik bekannten Verfahrens zum Betreiben eines Kaffeevollautomaten mit dargestelltem Verschiebeweg des Kolbens der Brüheinrichtung, und
- Figur 6: eine Darstellung eines erfindungsgemäßen Verfahrens zum Betreiben eines Kaffeevollautomaten mit dargestelltem Verschiebeweg des Kolbens der Brüheinrichtung.

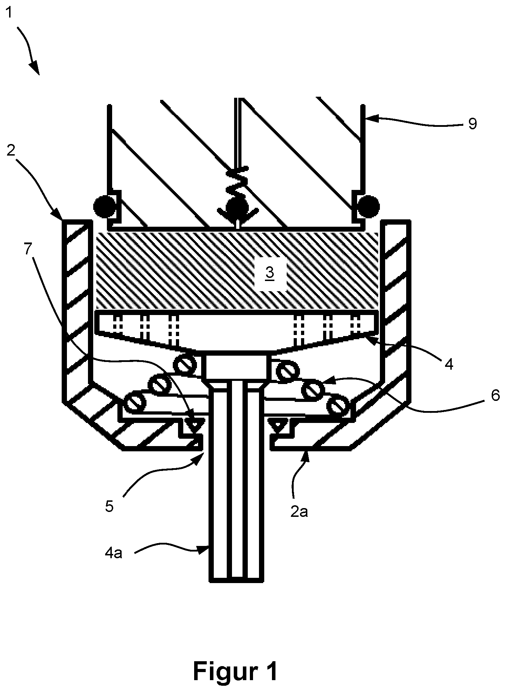

Figur 1 zeigt eine Schnittdarstellung einer Brüheinrichtung 1 mit einem Brühtopf 2 zur Aufnahme von Brühgut 3, bei der sich ein Kolben 4 in einer Drainage- und Belüftungsposition befindet. Der Brühtopf 2 ist im dargestellten Beispiel ein rotationssymmetrischer Zylinder und die Schnittebene verläuft durch seine Symmetrieachse. Der Kolben 2 ist zum Auswerfen des Brühguts 3 relativ zum Brühtopf 2 verschiebbar und in den Figuren ungeschnitten dargestellt. In einem Brühtopfboden 2a des Brühtopfs 2 ist ein kombinierter Drainage- und Belüftungsauslass 5 zur Belüftung und zur Drainage von Restwasser aus dem Brühtopf 2 ersichtlich. Der Drainage- und Belüftungsauslass 5 ist freigegeben, da eine Kraft aus einer im Brühtopfboden 2a angeordneten Federeinrichtung 6 auf den Kolben 4 wirkt, die größer ist als eine Gegenkraft, die aus einer Verschiebung des Brühtopfs 2 und des Brühguts 3 relativ zu einem Brühkopf 9 der Brüheinrichtung 1 resultiert. Dadurch entsteht ein freier Öffnungsquerschnitt zwischen einem Dichtelement 7 und einer Kolbenstange 4a des Kolbens 4. Die Federeinrichtung 6 wird im dargestellten Beispiel vollständig durch eine einzige Kegelschraubenfeder 6 gebildet. Daher sind für das vorliegende Beispiel die Begriffe "Federeinrichtung" und "Kegelschraubenfeder" gleichbedeutend und sind im Folgenden auch gegeneinander austauschbar mit dem Bezugszeichen 6 bezeichnet.

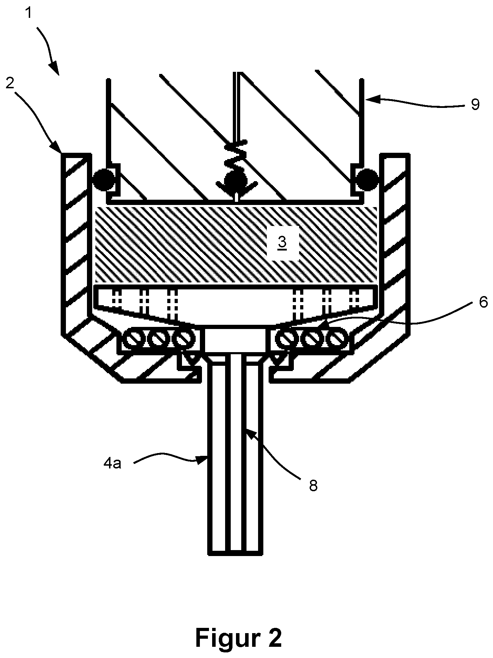

Figur 2 zeigt die Brüheinrichtung 1 mit dem Brühtopf 2 aus Figur 1, jedoch befinden sich bei der Darstellung der Figur 2 der Kolben 4 und Brühtopf 2 in einer Brühposition. Der Kolben 4 liegt durch die Gestaltung eines oberen Bereichs der Kolbenstange 4a dichtend am Dichtelement 7 an und verschließt so den Drainage- und Belüftungsauslass 5. Dabei ist gleichermaßen der Kolben 4 durch die Kegelschraubenfeder 6 am Brühtopfboden 2a vorgespannt. In der Brühposition wirkt eine Gegenkraft von einem Brühkopf 9 - im vorliegenden Beispiel ortsfest gestaltete - über das Brühgut 3 auf den Kolben 4, der Vorspannkraft der Kegelschraubenfeder 6 entgegen. Der Brühtopf 2 wird im vorliegenden Beispiel über eine nicht dargestellte Antriebsspindel der Brüheinrichtung 1 und einen nicht dargestellten Elektromotor verstellt und damit gegen den Brühkopf 9 gedrückt. Die Kegelschraubenfeder 6 ist gleichermaßen an einem Durchgangsloch für die Kolbenstange 4a im Brühtopfboden 2a und benachbart zum Dichtelement 7 angeordnet und umgreift die Kolbenstange 4a vollständig.

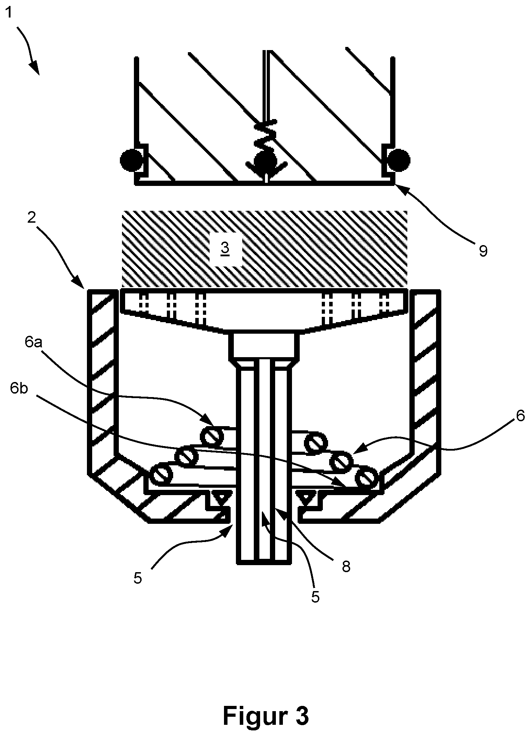

Die Kegelschraubenfeder 6 ist in Figur 2 geschnitten dargestellt, so dass drei Federwindungen ersichtlich sind. Die Kegelschraubenfeder 6 ist im vorliegenden Beispiel so gestaltet, dass in der Brühposition nicht nur mindestens zwei Federwindungen entlang einer Erstreckungsrichtung der Kolbenstange 4a auf gleicher Höhe liegen, sondern alle drei Federwindungen. Dadurch entspricht in Figur 2 auch ein Abstand zwischen einem oberen Federende 6a und einem unteren Federende 6b (besser ersichtlich in Figur 3) dem einfachen Wert eines mittleren Federdrahtdurchmessers. Die Kegelschraubenfeder 6 kann dadurch auf eine minimale Rest-Höhe zusammengestaucht werden und nutzt dadurch den verfügbaren Bauraum bei maximal möglichem Federweg bestmöglich aus.

Wie in Figur 3 und Figur 1 ersichtlich, ist der Drainage- und Belüftungsauslass 5 an einer tiefsten Stelle des Brühtopfs 2 vorgesehen. Die Kolbenstange 4a weist in ihrer Mitte eine Ausnehmung 8 zur gezielten Be- und Entlüftungsführung auf. Die Ausnehmung 8 ist im vorliegenden Beispiel als längs verlaufende Nut ausgeführt. Diese Nut beginnt an ihrem oberen Enden in Erstreckungsrichtung der Kolbenstange 4a direkt unterhalb einer Anlagefläche für das Dichtelement 7, das hier als Lippendichtring ausgestaltet ist. Dadurch kann die Be- und Entlüftungsführung einerseits in gezielter Richtung erfolgen und andererseits kann so die Belüftung zielgerichtet genau am Anfang einer Verschiebebewegung des Brühtopfs 2 beginnen. D. h. sie kann am Anfang einer Verschiebung aus der Brühposition nach Figur 2 heraus in Richtung der Belüftungsposition nach Figur 1 beginnen. Die Verschiebebewegung kann ggf. weiter in eine Position zum Auswerfen des Brühguts 3 führen, wie in Figur 3 dargestellt. Darüber hinaus kann die Be- und Entlüftung gezielt hauptsächlich über die Ausnehmung 8 erfolgen und die Drainagefunktion hauptsächlich neben der Ausnehmung 8, sowie zusätzlich an weiteren, hier nicht dargestellten Drainageausnehmungen an der Rückseite der Kolbenstange 4a. Dadurch kann besonders effektiv verhindert werden, dass Flüssigkeitstropfen auf dem Weg aus dem Brühtopf 2 durch einströmende Luft wieder in das Brühgut 3 zurück gelangen. Die Ausnehmung 8 ist damit ein Teil des Drainage- und Belüftungsauslasses 5.

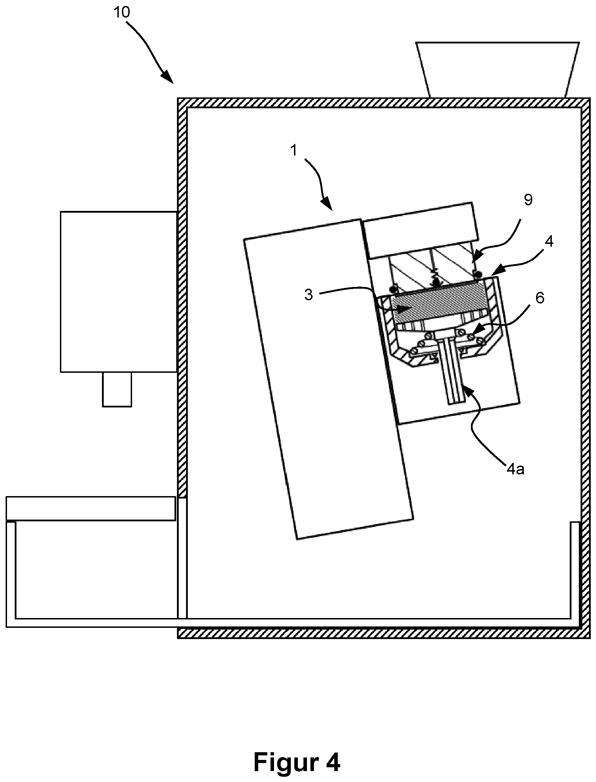

In Figur 4 ist ein Kaffeevollautomat 10 mit einer Brüheinrichtung 1 nach den Figuren 1 bis 3 dargestellt. Am Ende eines Brühvorgangs kann nach dem Stoppen einer nicht dargestellten Brühfluidpumpe der Brühtopf 2 vom Brühkopf 9 weg verschoben werden. Dadurch und durch die Vorspannung der Kegelschraubenfeder 6 am Brühtopfboden 2a wird der Kolben 4, relativ zum Brühtopf 2, zum Freigeben des Drainage- und Belüftungsauslass 5 bewegt, in die Drainage- und Belüftungsposition, wie in Figur 4 gezeigt. Gleichzeitig wirkt nach dem Stoppen der Brühfluidpumpe und während des Verschiebens die Kraft der Kegelschraubenfeder 6 über den Kolben 4 auf das Brühgut 3 ein, sodass etwaige Restfeuchte aus dem Brühgut 3 gedrückt wird. Der Anteil von Restfeuchtigkeit im Brühgut 3 kann dadurch bei sehr geringen Einfluss auf die Herstellkosten und den Bauraum des Kaffeevollautomaten 10 erheblich verringert werden. Dadurch kann einem Auftreten von Schimmelbildung effektiv entgegengewirkt und das Handling der Trester des ausgelaugten Brühguts 3 beim Entleeren des schematisch dargestellten Auffangbehälters deutlich verbessert werden.

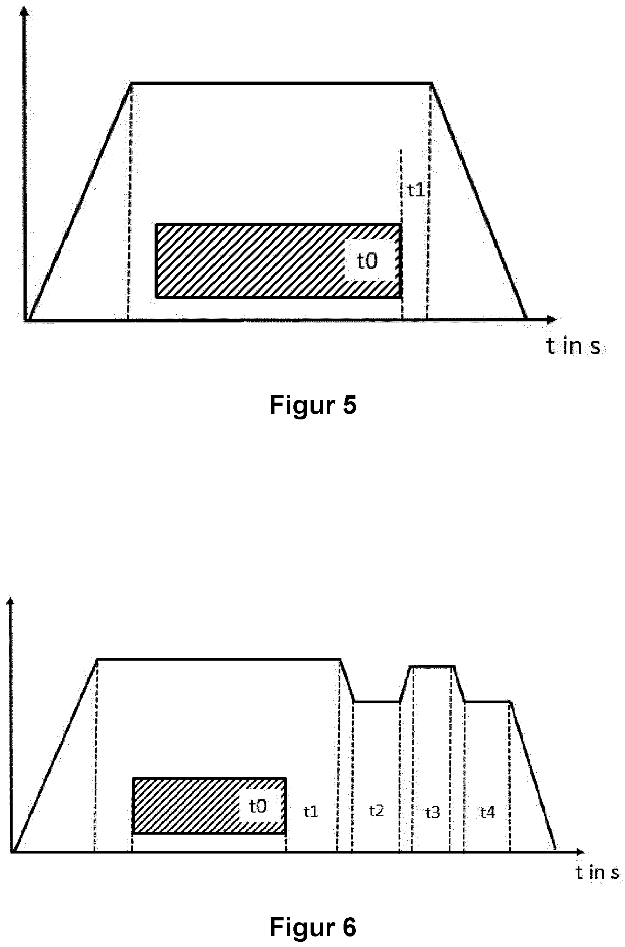

Um die Vorteile des dabei zur Anwendung kommenden, erfindungsgemäßen Verfahrens deutlicher herauszustellen, zeigt Figur 5 eine Darstellung eines aus dem Stand der Technik bekannten Verfahrens zum Betreiben eines Kaffeevollautomaten. In Figur 5 ist entlang einer Hochachse ein Verschiebeweg eines bekannten Brühtopfes einer bekannten Brüheinrichtung schematisch dargestellt und über der Zeit entlang einer Horizontalachse (t in s). Der bekannte Brühtopf wird in einem ersten Anstieg des ersichtlichen Graphen in eine Brühposition verstellt, in der er für die Zeit des Brühens verbleibt. Nach Abschalten einer Pumpe zum Zeitpunkt t0 wird er wieder in seine Ausgangslage verstellt, in der z. B. der Trester ausgeworfen wird.

In Figur 6 ist ein Verfahren zum Betreiben des Kaffeevollautomaten 10 nach Figur 4 mit der Brüheinrichtung 1 nach den Figuren 1 bis 3 dargestellt. Auch hier ist entlang einer Hochachse der Verschiebeweg des Brühtopfes 2 der Brüheinrichtung 1 schematisch dargestellt und über der Zeit entlang einer Horizontalachse (t in s) angetragen. Von einem Schnittpunkt der Achsen aus ist ein erster Anstieg ersichtlich, der (a) das Verschieben des Brühtopfs 2 relativ zum Brühkopf 9 zum Schließen einer Brühkammer und Verschieben des Brühtopfs 2 relativ zum Kolben 4 in die Brühposition des Kolbens 4 zum Verschließen des Drainage- und Belüftungsauslasses 5 zeigt. Während dem anschließenden vertikalen Abschnitt des Graphen erfolgt (b) das Fördern von Brühfluid durch betreiben einer Pumpe für eine Brühzeit t0 und beenden des Förderns durch stoppen der Pumpe. Nach dem Stoppen der Pumpe erfolgt (c) während einer vordefinierten ersten Verweilzeit t1 von zwei Sekunden im Wesentlichen kein Verschieben des Brühtopfs 2 relativ zum Brühkopf 9 oder zum Kolben 4. Daher verläuft der Graph auch hier vertikal. Ab dem Stoppen der Pumpe bewirkt die Kraft der Kegelschraubenfeder 6 über den Kolben 4 im Brühgut 3 ein Ausdrücken der Restfeuchtigkeit. Weiter erfolgt (d) ein Verschieben des Brühtopfs 2 relativ zum Kolben 4 soweit, dass in der Drainage- und Belüftungsposition des Kolbens 4 der Drainage- und Belüftungsauslass 5 freigegeben ist, was sich in Figur 6 als erster Abfall des Graphen zeigt. Anschließend erfolgt (e) während einer vordefinierten zweiten Verweilzeit t2 von zwei Sekunden im Wesentlichen kein Verschieben des Brühtopfs 2 relativ zum Brühkopf 9 und zum Kolben 4. In dieser Zeit kann die aus dem Brühgut 3 gedrückte und sich als Tropfen im Brühtopfboden 2a gesammelte Restfeuchte über den freigegebenen Drainage- und Belüftungsauslass 5 abfließen.

In Figur 6 als erneuter Anstieg dargestellt, rechts von t2, erfolgt anschließend (e - i) ein Verschieben des Brühtopfs 2 relativ zum Kolben 4 soweit, dass der Kolben 4 erneut in die Brühposition gelangt und der Drainage- und Belüftungsauslasses 5 verschlossen ist. Dabei wirkt wiederum die Kraft der Kegelschraubenfeder 6 über den Kolben 4 auf das Brühgut 3 ein, um etwaige z. B. in Randbereichen des Tresters verbliebene Restfeuchtigkeit auszudrücken. Um diesen Vorgang besonders effektiv zu gestalten, erfolgt anschließend (e - ii) während einer vordefinierten dritten Verweilzeit t3 von einer Sekunde im Wesentlichen kein Verschieben des Brühtopfs 2 relativ zum Brühkopf 9 und zum Kolben 4. Anschließend wird (e - iii) während einer vordefinierten vierten Verweilzeit t4 von zwei Sekunden der Brühtopf 2 relativ zum Kolben 4 soweit verschoben, dass in der Drainage- und Belüftungsposition des Kolbens 4 der Drainage- und Belüftungsauslass 5 freigegeben ist. Dies zeigt sich im Graphen der Figur 6 als letzter horizontaler Abschnitt. In dieser Zeit können auch die letzten aus dem Brühgut 3 gedrückten Tropfen der Restfeuchte über den freigegebenen Drainage- und Belüftungsauslass 5 abfließen.

Anschließend erfolgt (f) ein weiteres Verschieben des Brühtopfs 2 relativ zum Brühkopf 9 und zum Kolben 4 zum Öffnen der Brühkammer und Auswerfen des sehr effektiv von etwaiger Restfeuchtigkeit befreiten Brühguts 3, was in Figur 6 durch das letzte Abfallen des Graphen (rechts von t4) dargestellt ist.

Somit kann bei geringem Einfluss auf Herstellkosten und Bauraum des Kaffeevollautomaten 10 bzw. der Brüheinrichtung 1 ein Restfeuchtigkeitsbedingtes Anhaften von Brühgut 3 an der Auffangschale effektiv verhindert werden, was auch das Handling der Trester beim Entleeren eines Auffangbehälters verbessert.

Die in den Ausführungsbeispielen dargestellten Bestandteile wie z. B. Details des Brühtopfs 2 und der Federeinrichtung 6 sowie deren Größenverhältnisse zueinander sind grundsätzlich nicht als maßstabsgerecht anzusehen. Vielmehr können einzelne Elemente wie beispielsweise der Drainage- und Belüftungsauslass 5 oder die Ausnehmung 8 zur besseren Darstellbarkeit und/oder zum besseren Verständnis übertrieben dick oder groß dimensioniert dargestellt sein. Die Erläuterung der erfindungsgemäßen Brüheinrichtung 1 bzw. des Kaffeevollautomaten 10 anhand der beschriebenen Ausführungsbeispiele ist nicht als Beschränkung der Erfindung auf diese zu betrachten, was insbesondere auch für das erfindungsgemäße Verfahren und den Verlauf des Graphen nach Figur 6 gilt.

### BEZUGSZEICHENLISTE

- 1: Brüheinrichtung
- 2: Brühtopf
- 2a: Brühtopfboden
- 3: Brühgut
- 4: Kolben
- 4a: Kolbenstange
- 5: Drainage- und Belüftungsauslass
- 6: Federeinrichtung
- 6a: oberes Federende
- 6b: unteres Federende
- 7: Dichtelement
- 8: Ausnehmung
- 9: Brühkopf
- 10: Kaffeeautomat

## Patentansprüche

1. Brüheinrichtung (1), mit einem Brühtopf (2) zur Aufnahme von Brühgut (3), einem relativ zum Brühtopf (2) verschiebbaren Kolben (4) zum Auswerfen des Brühguts (3) und einem Drainage- und Belüftungsauslass (5) im Brühtopf (2) zur Drainage von Restwasser aus dem Brühtopf (2), wobei der Kolben (4) dazu eingerichtet ist,
i) in einer Drainage- und/oder Belüftungsposition des Kolbens (4) den Drainage- und Belüftungsauslass (5) freizugeben und
ii) in einer Brühposition des Kolbens (4) den Drainage- und Belüftungsauslass (5) zu verschließen, **dadurch gekennzeichnet, dass** der Kolben (4) in der Brühposition durch eine Federeinrichtung (6) an einem Brühtopfboden (2a) des Brühtopfs (2) vorgespannt ist.

2. Brüheinrichtung (1) nach Anspruch 1, **dadurch gekennzeichnet, dass** die Federeinrichtung (6) an einem im Brühtopfboden (2a) vorgesehen Durchgangsloch für eine Kolbenstange (4a) des Kolbens (4) und/oder benachbart zu einem Dichtelement (7) angeordnet ist.

3. Brüheinrichtung (1) nach Anspruch 2, **dadurch gekennzeichnet, dass** die Federeinrichtung (6) die Kolbenstange (4a) zumindest teilweise umgreift.

4. Brüheinrichtung (1) nach einem der Ansprüche 1 bis 3, **dadurch gekennzeichnet, dass** die Federeinrichtung (6) eine Tellerfeder, eine Evolutfeder, eine Membranfeder und/oder eine konische Druckfeder, insbesondere eine Kegelschraubenfeder, umfasst.

5. Brüheinrichtung (1) nach Anspruch 4, **dadurch gekennzeichnet, dass** die konische Druckfeder, insbesondere Kegelschraubenfeder, derart gestaltet ist, dass in der Brühposition des Kolbens (4) mindestens zwei Federwindungen entlang einer Erstreckungsrichtung der Kolbenstange (4a) im Wesentlichen auf gleicher Höhe liegen.

6. Brüheinrichtung (1) nach Anspruch 4 oder 5, **dadurch gekennzeichnet, dass** die konische Druckfeder, insbesondere Kegelschraubenfeder, derart gestaltet ist, dass in der Brühposition des Kolbens (4) ein Abstand zwischen einem oberen Federende (6a) und einem unteren Federende (6b) einem einfachen bis dreifachen Wert eines mittleren Federdrahtdurchmessers entspricht.

7. Brüheinrichtung (1) nach einem der Ansprüche 1 bis 6, wobei der Drainage- und Belüftungsauslass (5) an einer tiefsten Stelle des Brühtopfs (2) vorgesehen ist und/oder die Kolbenstange (4a) mindestens eine Ausnehmung (8) zur gezielten Be- und/oder Entlüftungsführung aufweist.

8. Kaffeeautomat (10), insbesondere Kaffeevollautomat, mit einer Brüheinrichtung (1) nach einem der Ansprüche 1 bis 7.

9. Verfahren zum Betreiben eines Kaffeeautomaten (10) nach Anspruch 8, mit den Schritten,
a) verschieben eines Brühtopfs (2) relativ zu einem Brühkopf (9) zum Schließen einer Brühkammer und verschieben des Brühtopfs (2) relativ zu einem Kolben (4) in eine Brühposition des Kolbens (4) zum Verschließen eines Drainage- und Belüftungsauslasses (5),
b) fördern von Brühfluid durch betreiben einer Pumpe für eine Brühzeit (t0) und beenden des Förderns durch stoppen der Pumpe,
**dadurch gekennzeichnet, dass**
c) nach dem Stoppen der Pumpe während einer vordefinierten ersten Verweilzeit (t1) im Wesentlichen kein Verschieben des Brühtopfs (2) relativ zum Brühkopf (9) oder zum Kolben (4) erfolgt, und anschließend
d) ein Verschieben des Brühtopfs (2) relativ zum Kolben (4) soweit erfolgt, dass in einer Drainage- und/oder Belüftungsposition des Kolbens (4) der Drainage- und Belüftungsauslass (5) freigegeben ist, und anschließend
e) während einer vordefinierten zweiten Verweilzeit (t2) im Wesentlichen kein Verschieben des Brühtopfs (2) relativ zum Kolben (4) erfolgt, und anschließend
f) ein weiteres Verschieben des Brühtopfs (2) relativ zum Brühkopf (9) zum Öffnen der Brühkammer und Auswerfen des Brühguts (3) erfolgt.

10. Verfahren zum Betreiben eines Kaffeeautomaten (10) nach Anspruch 9, **dadurch gekennzeichnet, dass** zwischen den Schritten e) und f) in einem Schritt
e - i) ein Verschieben des Brühtopfs (2) relativ zum Kolben (4) soweit erfolgt, dass der Kolben (4) erneut in die Brühposition gelangt und der Drainage- und Belüftungsauslasses (5) verschlossen ist, und
e - ii) während einer vordefinierten dritten Verweilzeit (t3) im Wesentlichen kein Verschieben des Brühtopfs (2) relativ zum Kolben (4) erfolgt, und anschließend
e - iii) während einer vordefinierten vierten Verweilzeit (t4) der Brühtopf (2) relativ zum Kolben (4) soweit verschoben wird, dass in der Drainage- und/oder Belüftungsposition des Kolbens (4) der Drainage- und Belüftungsauslass (5) freigegeben ist.

11. Verfahren zum Betreiben eines Kaffeeautomaten (10) nach Anspruch 9, **dadurch gekennzeichnet, dass** in einem Reinigungsmodus vor Schritt a) ein Reinigungsmittel, insbesondere in Form einer wasserlöslichen Reinigungstablette, in den Brühtopf (2) eingebracht wird, wobei im Schritt
a) durch das Verschieben des Brühtopfs (2) relativ zum Brühkopf (9) zum Schließen der Brühkammer und Verschieben des Brühtopfs (2) relativ zum Kolben (4) in die Brühposition des Kolbens (4) zum Verschließen des Drainage- und Belüftungsauslasses (5) das Reinigungsmittel zwischen dem Kolben (4) und dem Brühkopf (9) gelangt und das Verschließen des Drainage- und Belüftungsauslasses (5) unabhängig vom Erreichen der Brühposition in einer ersten Reinigungsposition erreicht wird, in Schritt
b) fördern von Brühfluid zu einem Lösen des Reinigungsmittels durch betreiben einer Pumpe für eine erste Reinigungszeit (tr0), in Schritt
c) während einer ersten Reinigerlösezeit (tr1) im Wesentlichen kein Verschieben des Brühtopfs (2) relativ zum Kolben (4) erfolgt, in Schritt
d) durch das Lösen des Reinigungsmittels bei Erreichen einer zweiten Reinigerlösezeit (tr2) ohne ein Verschieben des Brühtopfs (2) eine Verschiebung des Kolbens (4) soweit erfolgt, dass in der Drainage- und/oder Belüftungsposition des Kolbens (4) der Drainage- und Belüftungsauslass (5) zumindest kurzzeitig freigegeben ist, was durch eine Änderung einer gemessenen elektrischen Leistung der Pumpe ein Erreichen der zweiten Reinigerlösezeit (tr2) erfasst wird, und anschließend in Schritt
e) ein Verschieben des Brühtopfs (2) relativ zum Kolben (4) in eine zweite Reinigungsposition derart erfolgt, dass der Drainage- und Belüftungsauslass (5) für mindestens eine dritte Reinigerlösezeit (tr3) verschlossen wird, und anschließend in Schritt
f) ein weiteres Verschieben des Brühtopfs (2) relativ zum Brühkopf (9) zum Öffnen der Brühkammer und gezieltem Auslassen von noch im Brühtopf (2) verbliebenem, insbesondere gelöstem, Reinigungsmittel erfolgt.

12. Verfahren zum Betreiben eines Kaffeeautomaten (10) nach Anspruch 11, **dadurch gekennzeichnet, dass** im Schritt
e) durch eine weitere Änderung einer gemessenen elektrischen Leistung der Pumpe ein weiteres Verschieben des Kolbens (4) und Freigeben des Drainage- und Belüftungsauslasses (5) und somit ein Erreichen einer vierten Reinigerlösezeit (tr4) erfasst wird, und daraufhin ein weiteres Verschieben des Brühtopfs (2) relativ zum zum Kolben (4) in eine dritte Reinigungsposition derart erfolgt, dass der Drainage- und Belüftungsauslass (5) für mindestens eine fünfte Reinigerlösezeit (tr5) verschlossen wird, bevor ein Verschieben und Öffnen gemäß Schritt f) erfolgt.

## Claims

1. A brewing facility (1), with a brewing pot (2) for receiving brewing product (3), a piston (4) that can be displaced relative to the brewing pot (2) for ejecting the brewing product (3) and a drainage and aeration outlet (5) in the brewing pot (2) for draining residual water from the brewing pot (2), wherein the piston (4) is configured i) to open the drainage and aeration outlet (5) when the piston (4) is in a drainage and/or aeration position and
ii) to close the drainage and aeration outlet (5) when the piston (4) is in a brewing position,
**characterized in that** the piston (4) is pretensioned in the brewing position by a spring facility (6) on a brewing pot base (2a) of the brewing pot (2).

2. The brewing facility (1) as claimed in claim 1, **characterized in that** the spring facility (6) is arranged on a through-hole provided in the brewing pot base (2a) for a piston rod (4a) of the piston (4) and/or adjacent to a sealing element (7).

3. The brewing facility (1) as claimed in claim 2, **characterized in that** the spring facility (6) at least partially encompasses the piston rod (4a).

4. The brewing facility (1) as claimed in one of claims 1 to 3, **characterized in that** the spring facility (6) comprises a disk spring, a volute spring, a diaphragm spring and/or a conical compression spring, in particular a conical helical spring.

5. The brewing facility (1) as claimed in claim 4, **characterized in that** the conical compression spring, in particular conical helical spring, is designed in such a way that when the piston (4) is in the brewing position, at least two spring coils are substantially at the same height along a direction of extension of the piston rod (4a).

6. The brewing facility (1) as claimed in claim 4 or 5, **characterized in that** the conical compression spring, in particular a conical helical spring, is designed in such a way that when the piston (4) is in the brewing position, a distance between an upper spring end (6a) and a lower spring end (6b) corresponds to one to three times the value of an average spring wire diameter.

7. The brewing facility (1) as claimed in one of claims 1 to 6, wherein the drainage and aeration outlet (5) is provided at a lowest point of the brewing pot (2) and/or the piston rod (4a) has at least one recess (8) for targeted aeration and/or deaeration guidance.

8. A coffee machine (10), in particular fully automatic coffee machine, with a brewing facility (1) as claimed in one of claims 1 to 7.

9. A method for operating a coffee machine (10), as claimed in claim 8, with the steps
a) displacing a brewing pot (2) relative to a brewing head (9) in order to close a brewing chamber and displacing the brewing pot (2) relative to a piston (4) into a brewing position of the piston (4) in order to close a drainage and aeration outlet (5),
b) delivering brewing fluid by operating a pump for a brewing time (t0) and ending the delivery by stopping the pump,
**characterized in that**
c) after stopping the pump, there is substantially no displacement of the brewing pot (2) relative to the brewing head (9) and/or the piston (4) during a predefined first dwell time ( t1), and subsequently
d) the brewing pot (2) is displaced relative to the piston (4) to such an extent that the drainage and aeration outlet (5) is opened when the piston (4) is in a drainage and/or aeration position and subsequently
e) there is substantially no displacement of the brewing pot (2) relative to the piston (4) during a predefined second dwell time (t2), and subsequently
f) there is a further displacement of the brewing pot (2) relative to the brewing head (9) in order to open the brewing chamber and the brewing product (3) is ejected.

10. The method for operating a coffee machine (10) as claimed in claim 9, **characterized in that** between steps e) and f) in a step
e - i) the brewing pot (2) is displaced relative to the piston (4) to such an extent that the piston (4) arrives in the brewing position again and the drainage and aeration outlet (5) is closed, and
e - ii) there is substantially no displacement of the brewing pot (2) relative to the brewing head (9) during a predefined third dwell time (t3), and subsequently
e - iii) during a predefined fourth dwell time (t4), the brewing pot (2) is displaced relative to the piston (4) to such an extent that the drainage and aeration outlet ( 5) is opened when the piston (4) is in the drainage and/or aeration position.

11. The method for operating a coffee machine (10) as claimed in claim 9, **characterized in that** in a cleaning mode before step a) a cleaning agent, in particular in the form of a watersoluble cleaning tablet, is introduced into the brewing pot, wherein in step
a) due to the displacement of the brewing pot (2) relative to the brewing head (9) in order to close the brewing chamber and displacement of the brewing pot (2) relative to the piston (4) into the brewing position of the piston (4) in order to close the drainage and aeration outlet (5), the cleaning agent arrives between the piston (4) and the brewing head (9) and the drainage and aeration outlet (5) is closed independently of attainment of the brewing position in a first cleaning position, in step
b) delivering brewing fluid in order to dissolve the cleaning agent by operating a pump for a first cleaning time (tr0), in step
c) the brewing pot (2) is substantially not displaced relative to the piston (4) during a first cleaning agent dissolving time (tr1), in step
d) due to the cleaning agent dissolving on attainment of a second cleaning agent dissolving time (tr2), without displacement of the brewing pot (2), the piston (4) is displaced to such an extent that the drainage and aeration outlet (5) is opened at least briefly when the piston (4) is in the drainage and/or aeration position, and this is detected by a change in a measured electrical power of the pump, an attainment of the second cleaning agent dissolving time (tr2), and subsequently
e) the brewing pot (2) is displaced relative to the piston (4) into a second cleaning position in such a way that the drainage and aeration outlet (5) is closed for at least a third cleaning agent dissolving time (tr3) and subsequently in step
f) the brewing pot (2) is again displaced relative to the brewing head (9) in order to open the brewing chamber and, in particular dissolved, cleaning agent that is still in the brewing pot (2) is eliminated in a targeted manner.

12. The method for operating a coffee machine (10) as claimed in claim 11, **characterized in that** in step
e) due to a further change in a measured electrical power of the pump, a further displacement of the piston (4) and opening of the drainage and aeration outlet (5) and thus an attainment of a fourth cleaning agent dissolving time (tr4) is detected, and thereupon the brewing pot (2) is again displaced relative to the the piston (4) into a third cleaning position in such a way that the drainage and aeration outlet (5) is closed for at least a fifth cleaning agent dissolving time (tr5) before displacement and opening according to step f).

## Revendications

1. Dispositif d'infusion (1) comprenant un récipient d'infusion (2) destiné à recevoir une matière à infuser (3), un piston (4) mobile par rapport au récipient d'infusion (2) pour éjecter la matière à infuser (3) et un orifice d'écoulement et d'aération (5) ménagé dans le récipient d'infusion (2) pour évacuer l'eau résiduelle hors du récipient d'infusion (2), dans lequel le piston (4) est configuré pour
i) libérer l'orifice d'écoulement et d'aération (5) dans une position d'écoulement et/ou d'aération du piston (4), et
ii) fermer l'orifice d'écoulement et d'aération (5) dans une position d'infusion du piston (4), **caractérisé en ce que** le piston (4) est précontraint contre un fond de récipient d'infusion (2a) du récipient d'infusion (2) dans la position d'infusion par un moyen de ressort (6).

2. Dispositif d'infusion (1) selon la revendication 1, **caractérisé en ce que** le moyen de ressort (6) est disposé sur un trou traversant ménagé dans le fond du récipient d'infusion (2a) pour une tige de piston (4a) du piston (4) et/ou à proximité d'un élément d'étanchéité (7).

3. Dispositif d'infusion (1) selon la revendication 2, **caractérisé en ce que** le moyen de ressort (6) entoure au moins en partie la tige de piston (4a).

4. Dispositif d'infusion (1) selon l'une des revendications 1 à 3, **caractérisé en ce que** le moyen de ressort (6) comprend une rondelle-ressort, un ressort à volute, un ressort à diaphragme et/ou un ressort de compression conique, notamment un ressort hélicoïdal conique.

5. Dispositif d'infusion (1) selon la revendication 4, **caractérisé en ce que** le ressort de compression conique, en particulier le ressort hélicoïdal conique, est configuré de manière à ce que, dans la position d'infusion du piston (4), au moins deux spires du ressort se trouvent sensiblement à la même hauteur selon la direction longitudinale de la tige de piston (4a).

6. Dispositif d'infusion (1) selon la revendication 4 ou 5, **caractérisé en ce que** le ressort de compression conique, en particulier le ressort hélicoïdal conique, est conçu de manière à ce que, dans la position d'infusion du piston (4), une distance entre une extrémité supérieure de ressort (6a) et une extrémité inférieure de ressort (6b) soit comprise entre une et trois fois le diamètre moyen du fil de ressort.

7. Dispositif d'infusion (1) selon l'une des revendications 1 à 6, **caractérisé en ce que** l'orifice d'écoulement et d'aération (5) est ménagé au point le plus bas du récipient d'infusion (2) et/ou **en ce que** la tige de piston (4a) comprend au moins un évidement (8) pour guider une aération ciblée et/ou une purge ciblée.

8. Machine à café (10), en particulier machine à café automatique, comprenant un dispositif d'infusion (1) selon l'une des revendications 1 à 7.

9. Procédé de fonctionnement d'une machine à café (10) selon la revendication 8, comprenant les étapes suivantes :
a) déplacement d'un récipient d'infusion (2) par rapport à une tête d'infusion (9) afin de fermer une chambre d'infusion et déplacement du récipient d'infusion (2) par rapport à un piston (4) dans une position d'infusion du piston (4) pour obturer un orifice d'écoulement et d'aération (5),
b) alimentation d'un fluide d'infusion par actionnement d'une pompe durant une période d'infusion (t0) et arrêt de l'alimentation de fluide par arrêt de la pompe, **caractérisé en ce que**
c) après l'arrêt de la pompe, pendant un premier temps de séjour prédéfini (t1), aucun déplacement significatif du récipient d'infusion (2) par rapport à la tête d'infusion (9) ou au piston (4) n'est effectué, puis
d) le récipient d'infusion (2) est déplacé par rapport au piston (4) jusqu'à ce que l'orifice d'écoulement et d'aération (5) soit ouvert dans une position d'écoulement et/ou d'aération du piston (4), puis
e) pendant un deuxième temps de séjour prédéfini (t2), aucun déplacement significatif du récipient d'infusion (2) par rapport au piston (4) n'est effectué, puis
f) le récipient d'infusion (2) est à nouveau déplacé par rapport à la tête d'infusion (9) afin d'ouvrir la chambre d'infusion et d'éjecter la substance à infuser (3).

10. Procédé de fonctionnement d'une machine à café (10) selon la revendication 9, **caractérisé en ce qu'**entre les étapes e) et f), une étape intermédiaire est prévue, dans laquelle :
e-i) un déplacement du récipient d'infusion (2) par rapport au piston (4) est effectué jusqu'à ce que le piston (4) revienne en position d'infusion et que l'orifice d'écoulement et d'aération (5) soit fermé,
e-ii) pendant un troisième temps de séjour prédéfini (t3), aucun déplacement significatif du récipient d'infusion (2) par rapport au piston (4) n'est effectué, puis
e-iii) durant un quatrième temps de séjour prédéfini (t4), le récipient d'infusion (2) est déplacé par rapport au piston (4) jusqu'à ce que l'orifice d'écoulement et d'aération (5) soit ouvert dans la position d'écoulement et/ou d'aération du piston (4).

11. Procédé de fonctionnement d'une machine à café (10) selon la revendication 9, **caractérisé en ce que**, dans un mode de nettoyage précédant l'étape a), un produit de nettoyage, en particulier sous forme d'une pastille de nettoyage soluble dans l'eau, est introduit dans le récipient d'infusion (2),
dans lequel, dans l'étape
a) par le déplacement du récipient d'infusion (2) par rapport à la tête d'infusion (9) afin de fermer la chambre d'infusion et par le déplacement du récipient d'infusion (2) par rapport au piston (4) dans la position d'infusion du piston (4) afin d'obturer l'orifice d'écoulement et d'aération (5), le produit de nettoyage est amené entre le piston (4) et la tête d'infusion (9), l'obturation de l'orifice d'écoulement et d'aération (5) étant obtenue indépendamment de l'atteinte de la position d'infusion dans une première position de nettoyage,
b) le fluide d'infusion est alimenté par actionnement d'une pompe pendant un premier temps de nettoyage (tr0) afin de dissoudre le produit de nettoyage,
c) pendant un premier temps de dissolution du produit de nettoyage (tr1), aucun déplacement significatif du récipient d'infusion (2) par rapport au piston (4) n'est effectué,
d) à la suite de la dissolution, une fois un deuxième temps de dissolution du produit de nettoyage (tr2) atteint sans déplacement du récipient d'infusion (2), le piston (4) est déplacé jusqu'à une position d'écoulement et/ou d'aération du piston (4) dans laquelle l'orifice d'écoulement et d'aération (5) est ouvert au moins temporairement, l'atteinte du deuxième temps de dissolution du produit de nettoyage (tr2) étant détectée sur la base d'une modification d'une puissance électrique mesurée de la pompe, puis
e) le récipient d'infusion (2) est déplacé par rapport au piston (4) jusqu'à une deuxième position de nettoyage de telle sorte que l'orifice d'écoulement et d'aération (5) est obturé pendant au moins un troisième temps de dissolution du produit de nettoyage (tr3), et
f) le récipient d'infusion (2) est à nouveau déplacé par rapport à la tête d'infusion (9) afin d'ouvrir la chambre d'infusion et d'évacuer de façon ciblée le produit de nettoyage restant, en particulier dissous, dans le récipient d'infusion (2).

12. Procédé de fonctionnement d'une machine à café (10) selon la revendication 11, **caractérisé en ce que**, dans l'étape
e) un déplacement supplémentaire du piston (4) et une ouverture de l'orifice d'écoulement et d'aération (5) et ainsi l'atteinte d'un quatrième temps de dissolution du produit de nettoyage (tr4) sont détectés par une modification supplémentaire d'une puissance électrique mesurée de la pompe, puis un autre déplacement de la tête d'infusion (2) est effectué par rapport au piston (4) dans une troisième position de nettoyage de telle sorte que l'orifice d'écoulement et d'aération (5) est fermé pendant au moins un cinquième temps de dissolution du produit de nettoyage (tr5), avant qu'un déplacement et une ouverture selon l'étape f) ne soient effectués.
